# EUROPEAN PATENT APPLICATION

(11) **EP 2 314 996 A1**
(43) Date of publication of application: **27.04.2011**
(21) Application number: 09773113.7
(22) Date of filing: 12.06.2009
(51) Int. Cl.: G01K 7/00, G01K 7/24

(54) **ELECTRONIC THERMOMETER AND OPERATION CONTROL METHOD**

(30) Priority: 02.07.2008 JP 2008173868
(71) Applicant: Terumo Kabushiki Kaisha, Tokyo 151-0072 (JP)
(72) Inventor: SUZUKI, Minoru, Fujinomiya-shi Shizuoka 418-0015 (JP)
(74) Representative: Paget, Hugh Charles Edward
(86) International application number: PCT/JP2009/002678
(87) International publication number: WO 2010/001535

(57) **Abstract**

Provided is a long-life inexpensive electronic clinical thermometer with high measurement accuracy. The electronic clinical thermometer includes a thermistor, a reference resistor, a voltage switch for selectively applying a voltage in order to accumulate electric charge in a capacitor via the thermistor or reference resistor, an A/D converter for detecting a voltage change occurring when removing the electric charge accumulated in the capacitor via the thermistor or reference resistor, and outputting an ON signal while the capacitor has a voltage equal to or higher than a predetermined voltage, a timer for measuring the discharge time by measuring the duration of the ON signal, and an arithmetic processor for calculating the ambient temperature of the thermistor by using the discharge time when removing the electric charge accumulated in the capacitor via the thermistor, and the average value of the discharge times when removing the electric charge accumulated in the capacitor via the reference resistor immediately before and after removing the electric charge accumulated in the capacitor via the thermistor.

## Description

### TECHNICAL FIELD

The present invention relates to an electronic clinical thermometer.

### BACKGROUND ART

In the field of electronic clinical thermometers, a single-input integrating A/D converter has conventionally been used as a technique for measuring the resistance change of a thermistor caused by a temperature change.

The single-input integrating A/D converter is a circuit capable of accumulating electric charge in an amount proportional to the resistance change of a thermistor when a predetermined power supply voltage is applied, and outputting an ON signal having a duration proportional to the resistance change when the accumulated electric charge is removed. An electronic clinical thermometer can calculate a temperature value by measuring the ON time of the output ON signal from the circuit by using a timer.

The electronic clinical thermometer using the single-input integrating A/D converter, however, has the characteristic that an error occurs due to the influence of changes in the power supply voltage. Therefore, high-accuracy temperature measurement has been achieved by using, for example, a regulator for minimizing the fluctuation of a voltage to be applied.

### SUMMARY OF INVENTION

### TECHNICAL PROBLEM

The arrangement using a voltage regulator or the like, poses a problem in that the life of an electronic clinical thermometer cannot be prolonged because a leakage current of the voltage regulator accelerates the consumption of the battery. Also, the arrangement using a regulator or the like invariably raises the cost of an electronic clinical thermometer.

The present invention has been made in consideration of the above situation, and has as its objective the provision of an inexpensive long-life electronic clinical thermometer with high measurement accuracy by using a general-purpose LSI and not using any voltage regulator.

### SOLUTION TO PROBLEM

To achieve the above object, an electronic clinical thermometer according to the present invention includes the following arrangement. That is, the electronic clinical thermometer comprises
a thermistor connected in series with a capacitor;
a reference resistance element connected in series with the capacitor;
voltage switching means for selectively applying a voltage to one of the thermistor and the reference resistance element, such that electric charge is accumulated in the capacitor via one of the thermistor and the reference resistance element;
output means for detecting a voltage change occurring when removing the electric charge accumulated in the capacitor via one of the thermistor and the reference resistance element, and outputting a predetermined signal while the capacitor has a voltage not less than a predetermined voltage;
measuring means for measuring a discharge time of the capacitor by measuring a time period in which the predetermined signal is output; and
calculating means for calculating an ambient temperature of the thermistor by using a discharge time when removing the electric charge accumulated in the capacitor via the thermistor, and an average value of discharge times when removing the electric charge accumulated in the capacitor via the reference resistance element immediately before and after removing the electric charge accumulated in the capacitor via the thermistor.

### ADVANTAGEOUS EFFECTS OF INVENTION

The present invention can provide an inexpensive long-life electronic clinical thermometer with high measurement accuracy by using a general-purpose LSI and not using any voltage regulator.

Other features and advantages of the present invention will be apparent from the following explanation taken in conjunction with the accompanying drawings. Note that the same reference numerals denote the same or similar parts in the accompanying drawings.

### BRIEF DESCRIPTION OF DRAWINGS

The accompanying drawings, which are incorporated in and constitute a part of the specification, illustrate embodiments of the invention and, together with the description, serve to explain the principles of the invention.
Fig. 1 is a view showing the outer appearance of an electronic clinical thermometer 100 according to an embodiment of the present invention;
Fig. 2 is an internal block diagram showing the functional configuration of the electronic clinical thermometer 100;
Fig. 3 is a flowchart showing the procedure of a body temperature measurement process in the electronic clinical thermometer 100;
Fig. 4 is a view showing details of the arrangement of a temperature measurement unit 210;
Fig. 5 is a flowchart showing the procedure of a general temperature measurement process;
Fig. 6 is a graph showing the change in voltage across a capacitor 403 with time, and the change in output digital signal from an A/D converter 420 with time;
Fig. 7 is a flowchart showing the procedure of a temperature measurement process according to the first embodiment;
Fig. 8 is a graph showing the change in voltage across the capacitor 403 with time, and the change in output digital signal from the A/D converter 420 with time;
Fig. 9 is a flowchart showing the procedure of a temperature measurement process according to the third embodiment; and
Fig. 10 is a graph showing the change in voltage across a capacitor 403 with time, and the change in output digital signal from an A/D converter 420 with time.

### DESCRIPTION OF EMBODIMENTS

Embodiments of the present invention will be explained in detail below with reference to the accompanying drawings as needed.

### [First Embodiment]

### <1. Outer Appearance of Electronic Clinical Thermometer>

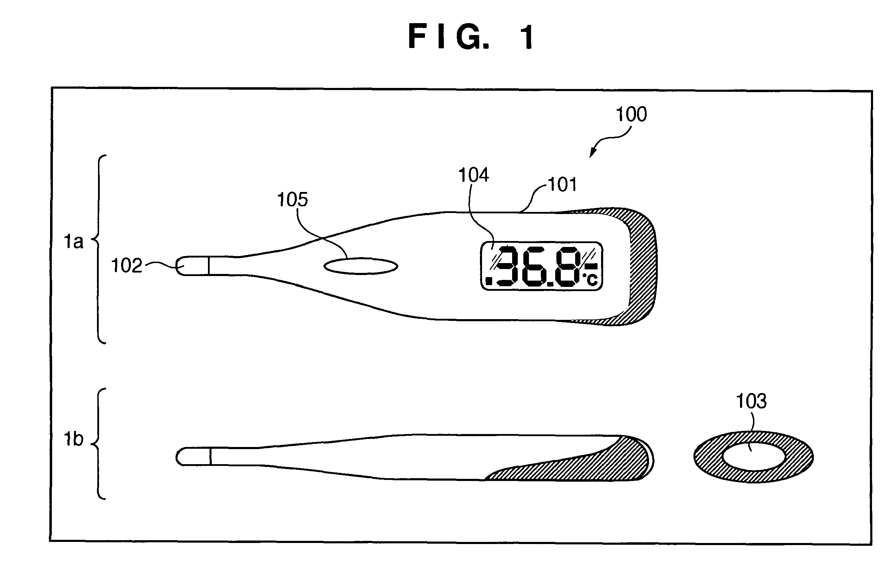

Fig. 1 is a view showing the outer appearance of an electronic clinical thermometer 100 according to an embodiment of the present invention. 1a of Fig. 1 is a plan view, and 1b of Fig. 1 is a side view. Reference numeral 101 denotes a main body case containing electronic circuits such as an arithmetic controller 220 (to be described later), a battery (power supply) 240, and the like.

Reference numeral 102 denotes a metal cap made of stainless steel and containing, for example, a thermistor (to be described in detail later) for measuring the temperature. Reference numeral 103 denotes a power ON/OFF switch. The power supply is turned on when the switch 103 is pressed once, and turned off when the switch 103 is pressed again.

Reference numeral 104 denotes a display unit that displays the body temperature of an object; and 105, a sound output unit that outputs a sound based on processing in the arithmetic controller 220.

### <2. Functional Configuration of Electronic Clinical Thermometer>

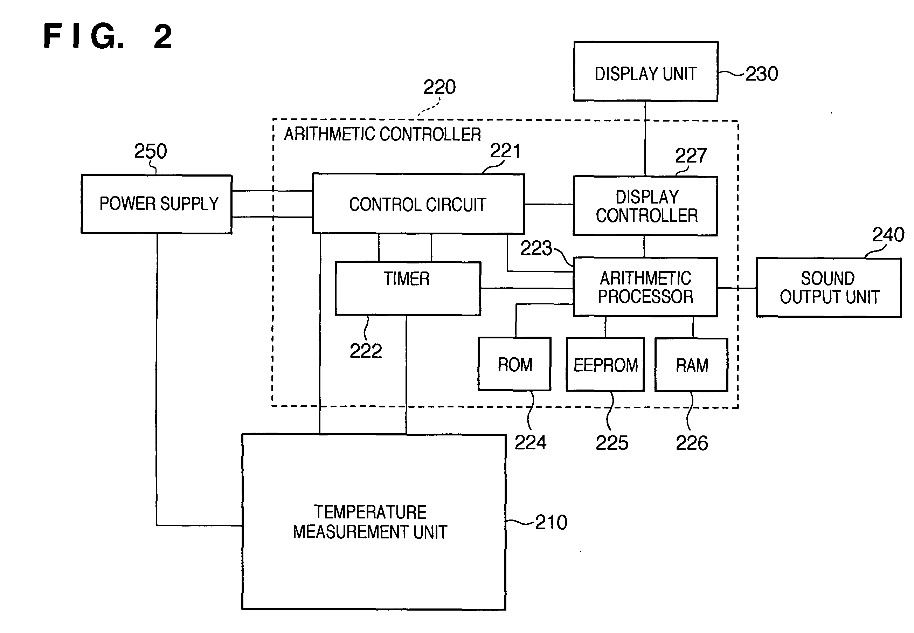

Fig. 2 is an internal block diagram showing the functional configuration of the electronic clinical thermometer 100 according to this embodiment.

The electronic clinical thermometer 100 includes a temperature measurement unit 210 for outputting an ON signal having a duration proportional to the temperature, the arithmetic controller 220 for calculating the body temperature of an object by performing various kinds of processing based on the ON signal output from the temperature measurement unit 210, and controlling the overall operation of the electronic clinical thermometer 100, a display unit 230 for displaying the calculated body temperature of an object, the sound output unit 240 for outputting sound data, and a power supply 250 with no voltage regulator.

The temperature measurement unit 210 includes a thermistor (measurement resistance element) and reference resistance element connected in parallel, and a single-input integrating A/D converter, and outputs an ON signal having a duration proportional to the temperature (a digital signal that changes the ON time in proportion to the temperature). Note that the details of the configuration and the procedure of the temperature measurement process of the temperature measurement unit 210 will be described later.

The arithmetic controller 220 includes a timer 222 for measuring the ON time of the digital signal output from the temperature measurement unit 210.

The arithmetic controller 220 also includes a ROM 224 storing a program for calculating temperature data based on the time measured by the timer 222, and predictively calculating the body temperature of an object based on the change in calculated temperature data with time, a RAM 226 for storing the calculated temperature data in time series, an EEPROM 225 storing predetermined sound data, and a arithmetic processor 223 for performing calculations complying with the program stored in the ROM 224 and outputting sound data.

In addition, the arithmetic controller 220 includes a display controller 227 for controlling the display unit 230 that displays the calculation results obtained by the arithmetic processor 223.

The arithmetic controller 220 further includes a control circuit 221 for controlling the timer 222, display controller 227, arithmetic processor 223, and temperature measurement unit 210 described above.

### <3. Procedure of Body Temperature Measurement Process in Electronic Clinical Thermometer>

The procedure of a body temperature measurement process in the electronic clinical thermometer will be explained below. Note that in this embodiment, the procedure of the body temperature measurement process of the equilibrium temperature prediction type electronic clinical thermometer 100 will be explained. However, the present invention is not limited to this, and also applicable to an observation type electronic clinical thermometer and prediction/observation type electronic clinical thermometer.

When attached to a measurement portion of an object, the electronic clinical thermometer 100 starts measuring the temperature at a predetermined period, and predictively calculates the body temperature of the object based on the change in acquired temperature data with time.

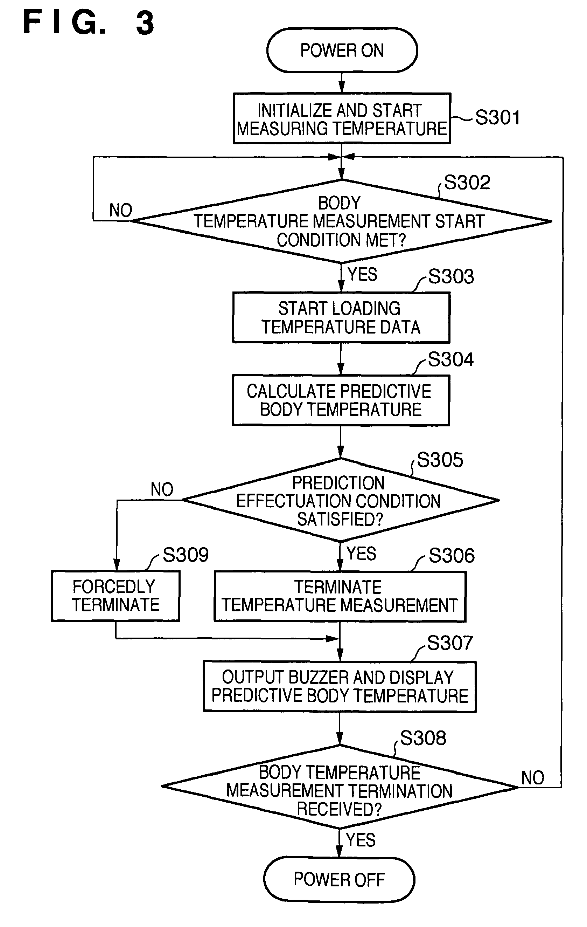

Fig. 3 is a flowchart showing the procedure of the body temperature measurement process in the electronic clinical thermometer 100. The procedure of the body temperature measurement process in the electronic clinical thermometer 100 will be explained below with reference to Fig. 3.

When the power supply 250 of the electronic clinical thermometer 100 is turned on, the electronic clinical thermometer 100 is initialized and the thermistor starts measuring the temperature in step S301. For example, the arithmetic processor 223 calculates temperature data at a predetermined interval, for example, 0.5 sec.

In step S302, whether the body temperature measurement start condition is met is determined. More specifically, whether the rise from the value of temperature data calculated by the last temperature measurement (that is, the value of temperature data calculated 0.5 sec before) is equal to or larger than a predetermined value (for example, 1°C).

If the rise is found to be equal to or larger than the predetermined value, it is determined that the body temperature measurement start condition is met, and the timing at which the temperature data is measured is set as the reference point (t = 0) of a predictive body temperature calculation. That is, when an abrupt temperature rise is measured, the electronic clinical thermometer 100 determines that the object has attached the electronic clinical thermometer 100 to a predetermined measurement portion (for example, the armpit).

If it is determined in step S302 that the body temperature measurement start condition is met, the process advances to step S303 to start loading temperature data. More specifically, output temperature data and the measurement timing of the temperature data are stored as time series data in the RAM 226.

In step S304, a predictive body temperature is calculated by a predetermined predictive expression by using the temperature data stored in step S303.

In step S305, whether the predictive value in a predetermined zone (for example, t = 25 to 30 sec) calculated in step S304 after a predetermined time (for example, 25 sec) has elapsed from the reference point (t = 0) satisfies a preset prediction effectuation condition is determined. More specifically, whether the predictive value falls within a predetermined range (for example, 0.1°C) is determined.

If it is determined in step S305 that the prediction effectuation condition is met, the process advances to step S306 to terminate the temperature measurement. The process then advances to step S307 to output a sound indicating the termination of the predictive body temperature calculation, and to display the calculated predictive body temperature on the display unit 230.

On the other hand, if it is determined in step S305 that the prediction effectuation condition is not met, the process advances to step S309. In step S309, whether a predetermined time (for example, 45 sec) has elapsed from the reference point (t = 0) is determined. If it is determined that the predetermined time has elapsed, the temperature measurement is forcibly terminated. Note that if the temperature measurement is forcibly terminated, the display unit 230 displays the calculated predictive body temperature (step S307).

In step S308, whether a body temperature measurement termination instruction is received is determined. If it is determined in step S308 that no body temperature measurement termination instruction is received, the process returns to step S302.

On the other hand, if it is determined in step S308 that the body temperature measurement termination instruction has been received, the power supply is turned off.

### <4. Details of Arrangement of Temperature Measurement Unit & Procedure of Temperature Measurement Process>

Details of the arrangement of the temperature measurement unit 210 and the procedure of the temperature measurement process started in step S301 will be explained below. Note that in the explanation of the temperature measurement process, the procedure of a general temperature measurement process will be explained first in order to further clarify the feature of the temperature measurement process according to this embodiment.

### <4.1 Details of Arrangement of Temperature Measurement Unit>

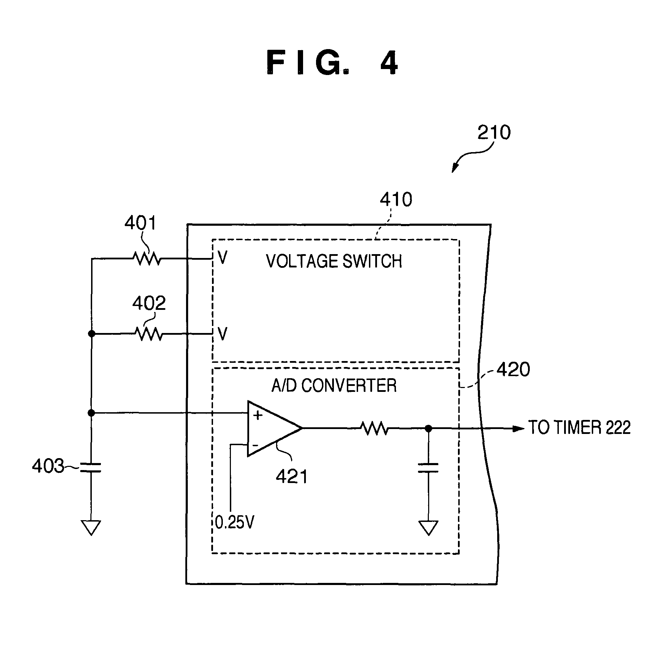

Fig. 4 is a view showing details of the arrangement of the temperature measurement unit 210. In the temperature measurement unit 210 as shown in Fig. 4, a thermistor 401 and reference resistance element 402 connected in parallel are connected in series with a capacitor 403. A voltage V is alternately applied and discharged across a system including the thermistor 401 and capacitor 403, and the two ends of a system including the reference resistance element 402 and capacitor 403, via a voltage switch 410.

The reference resistance element 402 is a resistance element whose resistance value is constant regardless of the fluctuation in ambient temperature. When the voltage V is constant, therefore, the discharge time is constant when discharge is performed via the reference resistance element 402.

On the other hand, the thermistor 401 is a resistance element whose resistance value fluctuates in accordance with the fluctuation in ambient temperature. Accordingly, when discharge is performed via the thermistor 401, the discharge time fluctuates in accordance with the ambient temperature.

That is, when the voltage V is constant, the discharge time is always constant when discharge is performed via the reference resistance element 402, and depends on the ambient temperature when discharge is performed via the thermistor 401.

The amount of electric charge accumulated in the capacitor 403 is detected via an A/D converter 420. A comparator 421 of the A/D converter 420 outputs a predetermined signal while the capacitor 403 has a voltage equal to or higher than a voltage (in this embodiment, 0.25 V) at a predetermined ratio of the voltage V applied via the voltage switch 410. Consequently, the A/D converter 420 outputs an ON signal as a digital signal.

Thus, the capacitor 403 and A/D converter 420 form a single-input integrating A/D converter.

When discharge is performed, the voltage between the two terminals of the capacitor 403 gradually decreases. When this voltage becomes equal to or lower than a predetermined voltage (0.25 V), the A/D converter 420 outputs an OFF signal as a digital signal.

The timer 222 measures the ON time (discharge time) of the digital signal output from the A/D converter 420.

As described previously, the discharge time is constant when accumulation and discharge are performed via the reference resistance element 402. On the other hand, when accumulation and discharge are performed via the thermistor 401, the discharge time fluctuates because the resistance value fluctuates in accordance with the ambient temperature.

At a known ambient temperature (reference temperature), therefore, the electronic clinical thermometer 100 premeasures the discharge time when electric charge accumulated in the capacitor 403 is removed via the thermistor 401, and the discharge time when electric charge accumulated in the capacitor 403 is removed via the reference resistance element 402.

As a consequence, the fluctuation ratio with respect to the reference temperature can be calculated by only comparing the discharge time when electric charge accumulated in the capacitor 403 is removed via the reference resistance element 402 with the discharge time when electric charge accumulated in the capacitor 403 is removed via the thermistor 401. This makes it possible to calculate temperature data of the ambient temperature.

More specifically, temperature data T is calculated based on the following equation.

T = 37°C x (Tth/Tref) x (Tref37/Tth37)
In the above equation, the reference temperature is 37°C.

Tref37 indicates the discharge time measured at the reference temperature when the voltage V is applied and discharged across the system including the reference resistance element 402 and capacitor 403. Tth37 indicates the discharge time measured at the reference temperature when the voltage V is applied and discharged across the system including the thermistor 401 and capacitor 403.

Tref indicates the discharge time measured in the temperature measurement process when the voltage V is applied and discharged across the system including the reference resistance element 402 and capacitor 403. Tth indicates the discharge time measured in the temperature measurement process when the voltage V is applied and discharged across the system including the thermistor 401 and capacitor 403.

### <4.2 Procedure of General Temperature Measurement Process>

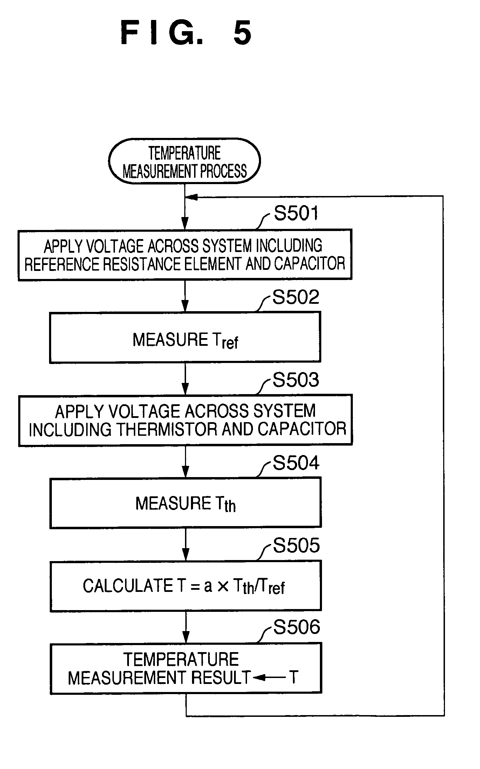

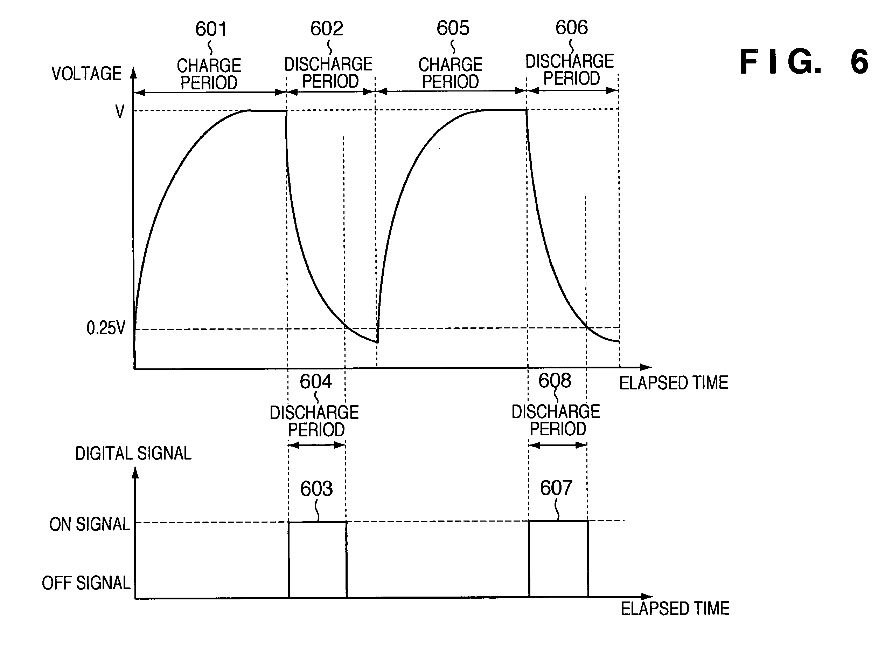

Fig. 5 is a flowchart showing the procedure of a general temperature measurement process. Fig. 6 is a graph showing the change in voltage across the capacitor 403 with time, and the change in output digital signal from the A/D converter 420 with time. The procedure of the general temperature measurement process will be explained below with reference to Figs. 5 and 6.

In step S501, the voltage V is applied across the system including the reference resistance element 402 and capacitor 403. 601 in Fig. 6 indicates a period (charge period) in which electric charge is gradually accumulated in the capacitor 403 by this voltage application.

When the capacitor 403 is completely charged, the capacitor 403 is discharged (a discharge period 602) in step S502. Since the A/D converter 420 outputs an ON signal (603), the timer 222 measures the duration of the ON signal. Consequently, a time (discharge time 604) Tref from the discharge start timing to the timing at which the voltage of the capacitor 403 becomes equal to or lower than a predetermined voltage (in this example, 0.25 V) is measured (see 602 in Fig. 6).

When the capacitor 403 is completely discharged, the voltage V is applied across the system including the thermistor 401 and capacitor 403 in step S503. 605 in Fig. 6 indicates a period (charge period) in which electric charge is gradually accumulated in the capacitor 403 by this voltage application.

When the capacitor 403 is completely charged, the capacitor 403 is discharged (a discharge period 606) in step S504. Since the A/D converter 420 outputs an ON signal (607), the timer 222 measures the duration of the ON signal. Consequently, a time (discharge time 608) Tth from the discharge start timing to the timing at which the voltage of the capacitor 403 becomes equal to or lower than a predetermined voltage (in this example, 0.25 V) is measured. Note that Tth fluctuates in accordance with the ambient temperature of the thermistor 401.

When the capacitor 403 is completely discharged, the process advances to step S505 to calculate T = a x Tth/Tref (where a is a coefficient, and a = 37°C x (Tref37/Tth37) in this example), thereby obtaining the fluctuation ratio with respect to the reference temperature, and calculating the temperature. In addition, a calculation result T is set as a temperature measurement result in step S506.

Thus, one temperature measurement is complete. This temperature measurement process is repeated until the termination of the temperature measurement is designated.

### <4.3 Problems of General Temperature Measurement Process>

The example shown in Fig. 6 assumes that the voltage applied across the system including the reference resistance element 402 and capacitor 403 is the same as the voltage applied across the system including the thermistor 401 and capacitor 403.

Unfortunately, the voltage applied across the system including the reference resistance element 402 and capacitor 403 is not always equal to the voltage applied across the system including the thermistor 401 and capacitor 403.

Generally, when using a battery as the power supply 250, the internal resistance of the battery increases and the voltage of the power supply 250 decreases under the influence of the current consumption produced by the operation of the A/D converter 420. When repetitively measuring the discharge time, therefore, the voltage of the power supply 250 decreases whenever the measurement is performed (more specifically, the voltage of the power supply 250 largely decreases when the discharge time is measured for the first time, gradually decreases from the second time whenever the measurement is performed, and finally converges to a predetermined power supply voltage).

That is, the voltage value of the voltage applied across the system including the reference resistance element 402 and capacitor 403 differs from that of the voltage applied across the system including the thermistor 401 and capacitor 403; the voltage applied later is lower.

Consequently, the measured discharge time contains the voltage drop of the power supply 250 as an error.

To avoid this event, it is effective to stabilize the voltage of the power supply by using a regulator or the like. However, the use of the regulator poses various problems as described earlier.

Accordingly, this embodiment uses an arrangement that maximally eliminates the error contained in the measured discharge time, equivalent to the voltage drop of the power supply 250 without using any regulator, thereby maintaining the measurement accuracy, prolonging the life, and reducing the cost. Details of the temperature measurement process according to this embodiment will be explained below.

### <4.4 Procedure of Temperature Measurement Process of This Embodiment>

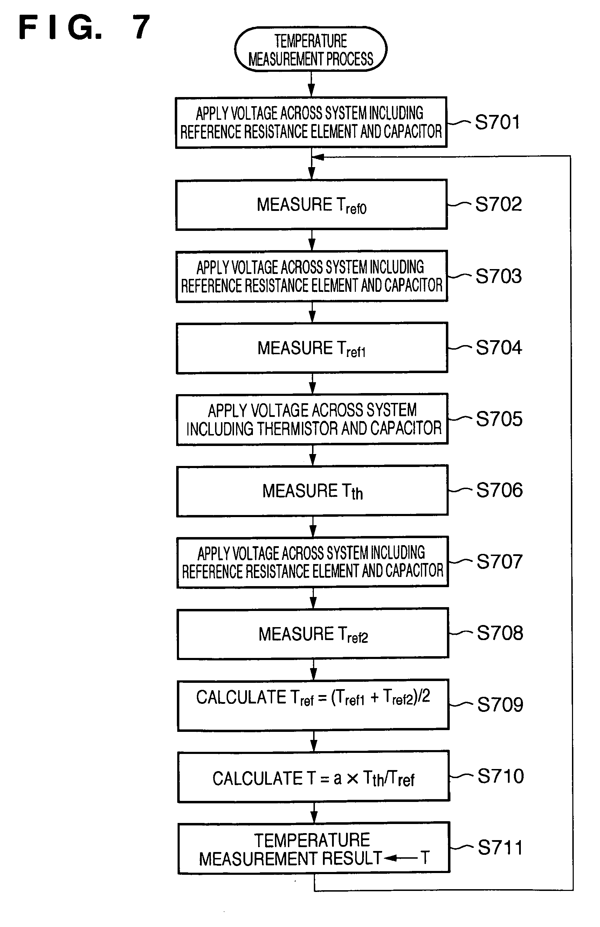

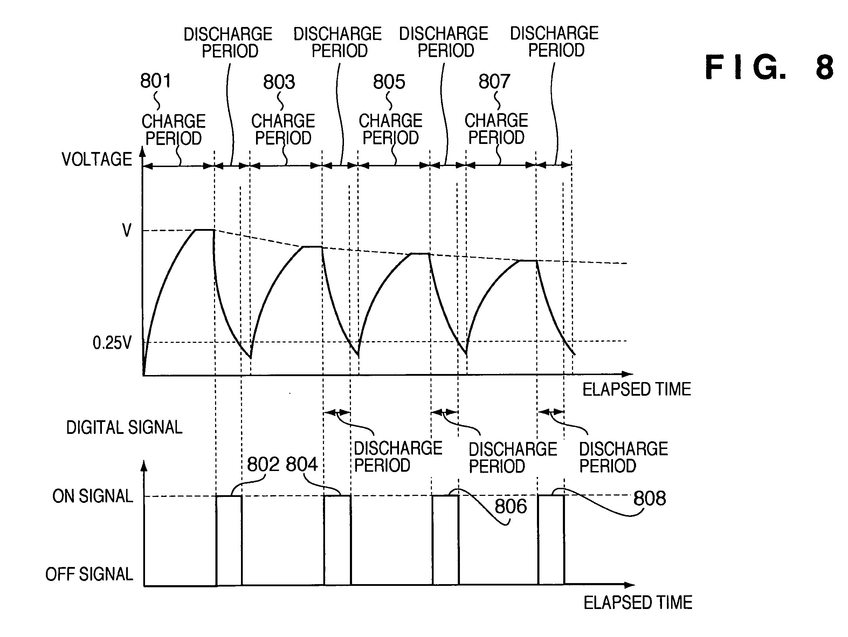

Fig. 7 is a flowchart showing the procedure of the temperature measurement process according to this embodiment. Fig. 8 is a graph showing the change in voltage across the capacitor 403 with time, and the change in output digital signal from the A/D converter 420 with time. The procedure of the temperature measurement process according to this embodiment will be explained below with reference to Figs. 7 and 8.

In step S701, the voltage V is applied across the system including the reference resistance element 402 and capacitor 403. 801 in Fig. 8 indicates a period (charge period) in which electric charge is gradually accumulated in the capacitor 403.

When the capacitor 403 is completely charged, the capacitor 403 is discharged in step S702. In this step, the timer 222 measures a time (discharge time 802) Tref0 from the discharge start timing to the timing at which the voltage of the capacitor 403 becomes equal to or lower than a predetermined voltage (0.25 V).

When the capacitor 403 is completely discharged, the voltage V is applied across the system including the reference resistance element 402 and capacitor 403 again in step S703. 803 in Fig. 8 indicates a period (charge period) in which electric charge is gradually accumulated in the capacitor 403 by this voltage application.

When the capacitor 403 is completely charged, the capacitor 403 is discharged in step S704. In this step, the timer 222 measures a time (discharge time 804) Tref1 from the discharge start timing to the timing at which the voltage of the capacitor 403 becomes equal to or lower than the predetermined voltage (0.25 V).

When the capacitor 403 is completely discharged, the voltage V is applied across the system including the thermistor 401 and capacitor 403 in step S705. 805 in Fig. 8 indicates a period (charge period) in which electric charge is gradually accumulated in the capacitor 403.

When the capacitor 403 is completely charged, the capacitor 403 is discharged in step S706. In this step, a time (discharge time 806) Tth from the discharge start timing to the timing at which the voltage of the capacitor 403 becomes equal to or lower than the predetermined voltage (0.25 V) is measured. Note that Tth fluctuates in accordance with the ambient temperature of the thermistor 401.

When the capacitor 403 is completely discharged, the voltage V is applied across the system including the reference resistance element 402 and capacitor 403 again in step S707. 807 in Fig. 8 indicates a period (charge period) in which electric charge is gradually accumulated in the capacitor 403 by this voltage application.

When the capacitor 403 is completely charged, the capacitor 403 is discharged in step S708. In this step, the timer 222 measures a time (discharge time 808) Tref2 from the discharge start timing to the timing at which the voltage of the capacitor 403 becomes equal to or lower than the predetermined voltage (0.25 V).

When the capacitor 403 is completely discharged, Tref = (Tref1 + Tref2)/2 is calculated in step S709.

In addition, in step S710 T = a x Tth/Tref (where a is a coefficient) is calculated, thereby obtaining the fluctuation ratio with respect to the reference temperature, and calculating temperature data. Furthermore, in step S711, a calculation result T is set as a temperature measurement result.

Thus, one temperature measurement is complete. This temperature measurement process is repetitively executed until the termination of the temperature measurement is designated.

In the electronic clinical thermometer according to this embodiment as described above, the first discharge time Tref0 is not used in the calculation of temperature data. Consequently, it is possible to reduce the influence of a large voltage drop of the power supply 250, which is caused by the first discharge. Note that it is of course also possible to perform the first discharge by using the thermistor, and calculate temperature data without using the first discharge time Tth0.

Also, in the electronic clinical thermometer according to this embodiment, immediately before and after the discharge time is measured when electric charge accumulated in the capacitor is removed via the thermistor, electric charge is accumulated in the capacitor via the reference resistance element, and the discharge times Tref1 and Tref2 are measured when removing the accumulated electric charge. In addition, the average value of the discharge times Tref1 and Tref2 measured immediately before and after the measurement is used in the calculation of temperature data.

Since the average value of the discharge times is used in the calculation of temperature data as described above, it is possible to minimize the influence of the voltage drop of the power supply, which is caused by the repetitive measurement of the discharge time.

That is, highly accurate temperature measurement can be achieved without using any regulator. This makes it possible to provide a long-life inexpensive electronic clinical thermometer with high measurement accuracy.

### [Second Embodiment]

In the above-mentioned first embodiment, one temperature measurement process is completed by repeating the charge/discharge of the capacitor four times immediately after the temperature measurement process is started. However, the present invention is not limited to this. For example, it is also possible to complete one temperature measurement process by repeating the charge/discharge of the capacitor three times.

More specifically, it is possible to set the charge sequence such that first time: reference resistance element, second time: reference resistance element, and third time: thermistor, and calculate temperature data by comparing a second discharge time Tref1 with a third discharge time Tth, without using a first discharge time Tref0.

Alternatively, it is also possible to set the charge sequence such that first time: reference resistance element, second time: thermistor, and third time: reference resistance element, and calculate temperature data by using the first discharge time Tref0, and the average value of the second discharge time Tth and third discharge time Tref1.

### [Third Embodiment]

In the above-mentioned first embodiment, one temperature measurement process is completed by repeating the charge/discharge of the capacitor four times immediately after the temperature measurement process is started. However, the present invention is not limited to this. For example, it is also possible to complete one temperature measurement process by repeating the charge/discharge of the capacitor after the voltage drop of the power supply caused by the repetitive measurement of the discharge time has converged within the range of a predetermined threshold value.

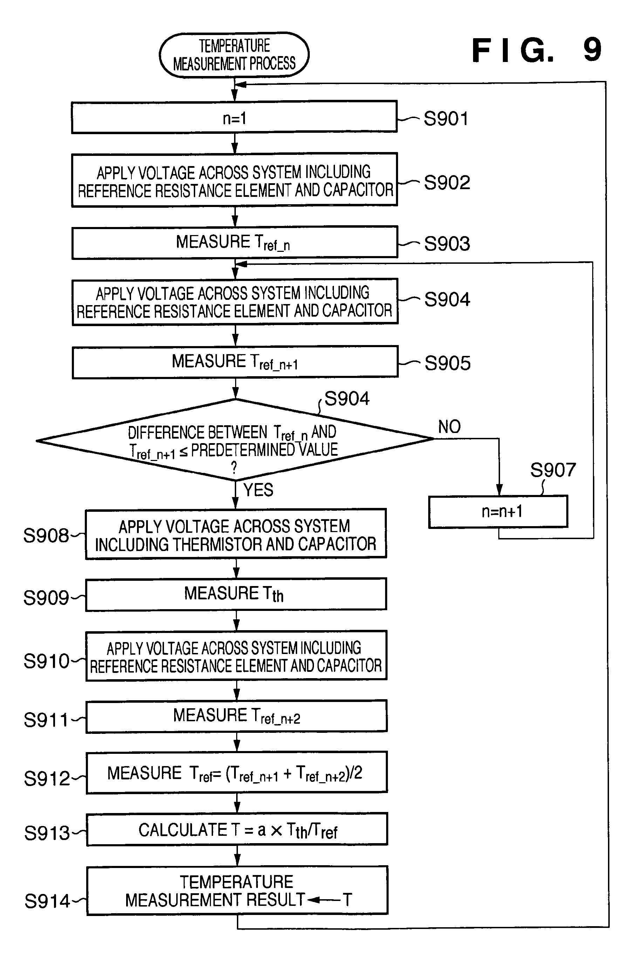

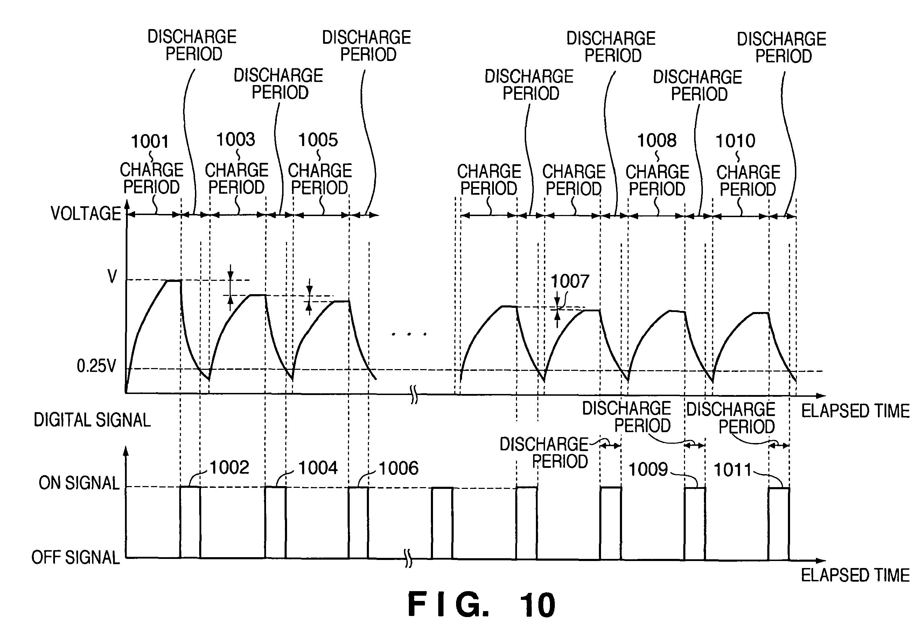

Fig. 9 is a flowchart showing the procedure of a temperature measurement process according to this embodiment. Fig. 10 is a graph showing the change in voltage across a capacitor 403 with time, and the change in output digital signal from an A/D converter 420 with time. The procedure of the temperature measurement process according to this embodiment will be explained below with reference to Figs. 9 and 10.

First, 1 is input to a counter n in step S901. In step S902, a voltage V is applied across a system including a reference resistance element 402 and the capacitor 403. 1001 in Fig. 10 indicates a period (charge period) in which electric charge is gradually accumulated in the capacitor 403 by this voltage application.

When the capacitor 403 is completely charged, the capacitor 403 is discharged in step S903. In this step, a timer 222 measures a time (discharge time 1002) Tref0 from the discharge start timing to the timing at which the voltage of the capacitor 403 becomes equal to or lower than a predetermined voltage (0.25 V).

When the capacitor 403 is completely discharged, the voltage V is applied across the system including the reference resistance element 402 and capacitor 403 again in step S904. 1003 in Fig. 10 indicates a period (charge period) in which electric charge is gradually accumulated in the capacitor 403 by this voltage application.

When the capacitor 403 is completely charged, the capacitor 403 is discharged in step S905. In this step, the timer 222 measures a time (discharge time 1004) Tref1 from the discharge start timing to the timing at which the voltage of the capacitor 403 becomes equal to or lower than the predetermined voltage (0.25 V).

When the capacitor 403 is completely discharged, the process advances to step S906 to compare a voltage V0 obtained when Tref0 is measured with a voltage V1 obtained when Tref1 is measured, thereby calculating the difference between the voltages V0 and V1 (calculating the difference between Tref0 and Tref1 in practice). If it is determined that the difference between the voltages V0 and V1 is neither equal to nor smaller than a predetermined value, the process advances to step S907 to increment the value of n, and returns to step S904.

In step S904, the voltage V is applied across the system including the reference resistance element 402 and capacitor 403 again. 1005 in Fig. 10 indicates a period (charge period) in which electric charge is gradually accumulated in the capacitor 403 by this voltage application.

When the capacitor 403 is completely charged, the capacitor 403 is discharged in step S905. In this step, the timer 222 measures a time (discharge time 1006) Tref2 from the discharge start timing to the timing at which the voltage of the capacitor 403 becomes equal to or lower than the predetermined voltage (0.25 V).

When the capacitor 403 is completely discharged, the process advances to step S906 to compare the voltage V1 obtained when Tref1 is measured with a voltage V2 obtained when Tref2 is measured, thereby calculating the difference between the voltages V1 and V2 (calculating the difference between Tref1 and Tref2 in practice). If it is determined that the difference between the voltages V1 and V2 is neither equal to nor smaller than the predetermined value, the process advances to step S907 to increment the value of n, and returns to step S904.

After that, the process of applying the voltage V across the system including the reference resistance element 402 and capacitor 403 and the process of removing the electric charge accumulated in the capacitor 403 via the reference resistance element 402 are repeated until the voltage drop caused by the repetitive measurement of the discharge time becomes equal to or smaller than the predetermined value.

If it is determined that the voltage drop (1007) caused by the repetitive measurement of the discharge time becomes equal to or smaller than the predetermined value, the process advances to step S908.

In step S906, the voltage V is applied across a system including a thermistor 401 and the capacitor 403. 1008 in Fig. 10 indicates a period (charge period) in which electric charge is gradually accumulated in the capacitor 403 by this voltage application.

When the capacitor 403 is completely charged, the capacitor 403 is discharged via the thermistor 401 in step S909. In this step, a time (discharge time 1009) Tth from the discharge start timing to the timing at which the voltage of the capacitor 403 becomes equal to or lower than the predetermined voltage (0.25 V) is measured.

When the capacitor 403 is completely discharged, the voltage V is applied across the system including the reference resistance element 402 and capacitor 403 again in step S910. 1010 in Fig. 10 indicates a period (charge period) in which electric charge is gradually accumulated in the capacitor 403 by this voltage application.

When the capacitor 403 is completely charged, the capacitor 403 is discharged via the reference resistance element 402 in step S911. In this step, the timer 222 measures a time (discharge time 1011) Tref_n+1 from the discharge start timing to the timing at which the voltage of the capacitor 403 becomes equal to or lower than the predetermined voltage (0.25 V).

When the capacitor 403 is completely discharged, Tref = (Tref_n + Tref_n+1)/2 is calculated in step S912.

In addition, in step S913, T = a x Tth/Tref (where a is a coefficient) is calculated, thereby obtaining the fluctuation ratio with respect to the reference temperature, and calculating temperature data. Furthermore, in step S914, a calculation result T is set as a temperature measurement result.

Thus, one temperature measurement is complete. This temperature measurement process is repetitively executed until the termination of the temperature measurement is designated.

In the electronic clinical thermometer according to this embodiment as described above, the charge/discharge of the capacitor is repeated via the reference resistance element until the voltage drop of the power supply caused by the repetitive measurement of the discharge time converges within the range of the predetermined threshold value. This makes it possible to reduce the influence of a large voltage drop of the power supply caused by discharge.

Also, in the electronic clinical thermometer according to this embodiment, immediately before and after the discharge time is measured when electric charge accumulated in the capacitor is removed via the thermistor, electric charge is accumulated in the capacitor via the reference resistance element, and the discharge times Tref_n and Tref_n+1 are measured when removing the accumulated electric charge. In addition, the average value of the discharge times Tref_n and Tref_n+1 measured immediately before and after the measurement is used in the calculation of temperature data.

Since the average value of the discharge times is used as described above, it is possible to minimize the influence of the voltage drop of the power supply, which is caused by the repetitive measurement of the discharge time.

That is, highly accurate temperature measurement can be achieved without using any regulator. This makes it possible to provide a long-life inexpensive electronic clinical thermometer with high measurement accuracy.

The present invention is not limited to the above embodiment, and various changes and modifications can be made without departing from the spirit and scope of the invention. Therefore, to apprise the public of the scope of the present invention, the following claims are appended.

## Claims

1. An electronic clinical thermometer **characterized by** comprising:
a thermistor connected in series with a capacitor;
a reference resistance element connected in series with said capacitor;
voltage switching means for selectively applying a voltage to one of said thermistor and said reference resistance element, such that electric charge is accumulated in said capacitor via one of said thermistor and said reference resistance element;
output means for detecting a voltage change occurring when removing the electric charge accumulated in said capacitor via one of said thermistor and said reference resistance element, and outputting a predetermined signal while said capacitor has a voltage not less than a predetermined voltage;
measuring means for measuring a discharge time of said capacitor by measuring a time period in which the predetermined signal is output; and
calculating means for calculating an ambient temperature of said thermistor by using a discharge time when removing the electric charge accumulated in said capacitor via said thermistor, and an average value of discharge times when removing the electric charge accumulated in said capacitor via said reference resistance element immediately before and after removing the electric charge accumulated in said capacitor via said thermistor.

2. An electronic clinical thermometer **characterized by** comprising:
a thermistor connected in series with a capacitor;
a reference resistance element connected in series with said capacitor;
voltage switching means for selectively applying a voltage to one of said thermistor and said reference resistance element, such that electric charge is accumulated in said capacitor via one of said thermistor and said reference resistance element;
output means for detecting a voltage change occurring when removing the electric charge accumulated in said capacitor via one of said thermistor and said reference resistance element, and outputting a predetermined signal while said capacitor has a voltage not less than a predetermined voltage;
measuring means for measuring a discharge time of said capacitor by measuring a time period in which the predetermined signal is output; and
calculating means for calculating an ambient temperature of said thermistor by using a discharge time when removing the electric charge accumulated in said capacitor via said thermistor, and a discharge time when removing the electric charge accumulated in said capacitor via said reference resistance element,
wherein said calculating means calculates the ambient temperature after electric charge is accumulated at least once in said capacitor via one of said thermistor and said reference resistance element, and the accumulated electric charge is removed.

3. An electronic clinical thermometer **characterized by** comprising:
a thermistor connected in series with a capacitor;
a reference resistance element connected in series with said capacitor;
voltage switching means for selectively applying a voltage to one of said thermistor and said reference resistance element, such that electric charge is accumulated in said capacitor via one of said thermistor and said reference resistance element;
output means for detecting a voltage change occurring when removing the electric charge accumulated in said capacitor via one of said thermistor and said reference resistance element, and outputting a predetermined signal while said capacitor has a voltage not less than a predetermined voltage;
measuring means for measuring a discharge time of said capacitor by measuring a time period in which the predetermined signal is output; and
calculating means for calculating an ambient temperature of said thermistor by using a discharge time when removing the electric charge accumulated in said capacitor via said thermistor, and an average value of discharge times when removing the electric charge accumulated in said capacitor via said reference resistance element immediately before and after removing the electric charge accumulated in said capacitor via said thermistor,
wherein said calculating means calculates the ambient temperature after electric charge is accumulated at least once in said capacitor via one of said thermistor and said reference resistance element, and the accumulated electric charge is removed.

4. The electronic clinical thermometer according to any one of claims 1 to 3, **characterized in that** said calculating means calculates the ambient temperature by using information concerning a discharge time when removing electric charge accumulated in said capacitor via said reference resistance element by applying a predetermined voltage at a known ambient temperature, and a discharge time when removing electric charge accumulated in said capacitor via said thermistor by applying the predetermined voltage at the known ambient temperature.

5. The electronic clinical thermometer according to any one of claims 1 to 3, **characterized by** further comprising monitoring means for, when a process of accumulating electric charge in said capacitor via said reference resistance element and removing the electric charge is repeated a number of times, monitoring a difference between an amount of electric charge accumulated in said capacitor via said reference resistance element the last time and an amount of electric charge accumulated in said capacitor via said reference resistance element this time,
wherein said calculating means calculates the ambient temperature if said monitoring means determines that the difference falls within a range of a predetermined value.

6. The electronic clinical thermometer according to any one of claims 1 to 3, **characterized in that** said output means comprises an A/D converter.

7. A control method of an electronic clinical thermometer comprising:
a thermistor connected in series with a capacitor;
a reference resistance element connected in series with the capacitor; and
voltage switching means for selectively applying a voltage to one of the thermistor and the reference resistance element, such that electric charge is accumulated in the capacitor via one of the thermistor and the reference resistance element,
**characterized by** comprising:
the output step of detecting a voltage change occurring when removing the electric charge accumulated in the capacitor via one of the thermistor and the reference resistance element, and outputting a predetermined signal while the capacitor has a voltage not less than a predetermined voltage;
the measurement step of measuring a discharge time of the capacitor by measuring a time period in which the predetermined signal is output; and
the calculation step of calculating an ambient temperature of the thermistor by using a discharge time when removing the electric charge accumulated in the capacitor via the thermistor, and an average value of discharge times when removing the electric charge accumulated in the capacitor via the reference resistance element immediately before and after removing the electric charge accumulated in the capacitor via the thermistor.

8. A control method of an electronic clinical thermometer comprising:
a thermistor connected in series with a capacitor;
a reference resistance element connected in series with the capacitor; and
voltage switching means for selectively applying a voltage to one of the thermistor and the reference resistance element, such that electric charge is accumulated in the capacitor via one of the thermistor and the reference resistance element,
**characterized by** comprising:
the output step of detecting a voltage change occurring when removing the electric charge accumulated in the capacitor via one of the thermistor and the reference resistance element, and outputting a predetermined signal while the capacitor has a voltage not less than a predetermined voltage;
the measurement step of measuring a discharge time of the capacitor by measuring a time period in which the predetermined signal is output; and
the calculation step of calculating an ambient temperature of the thermistor by using a discharge time when removing the electric charge accumulated in the capacitor via the thermistor, and a discharge time when removing the electric charge accumulated in the capacitor via the reference resistance element,
wherein in the calculation step, the ambient temperature is calculated after electric charge is accumulated at least once in the capacitor via one of the thermistor and the reference resistance element, and the accumulated electric charge is removed.

9. A control method of an electronic clinical thermometer comprising:
a thermistor connected in series with a capacitor;
a reference resistance element connected in series with the capacitor; and
voltage switching means for selectively applying a voltage to one of the thermistor and the reference resistance element, such that electric charge is accumulated in the capacitor via one of the thermistor and the reference resistance element,
**characterized by** comprising:
the output step of detecting a voltage change occurring when removing the electric charge accumulated in the capacitor via one of the thermistor and the reference resistance element, and outputting a predetermined signal while the capacitor has a voltage not less than a predetermined voltage;
the measurement step of measuring a discharge time of the capacitor by measuring a time period in which the predetermined signal is output; and
the calculation step of calculating an ambient temperature of the thermistor by using a discharge time when removing the electric charge accumulated in the capacitor via the thermistor, and an average value of discharge times when removing the electric charge accumulated in the capacitor via the reference resistance element immediately before and after removing the electric charge accumulated in the capacitor via the thermistor,
wherein in the calculation step, the ambient temperature is calculated after electric charge is accumulated at least once in the capacitor via one of the thermistor and the reference resistance element, and the accumulated electric charge is removed.
